# EUROPEAN PATENT SPECIFICATION

(11) **EP 2 950 076 B1**
(45) Date of publication and mention of the grant of the patent: **28.06.2017**
(21) Application number: 14169774.8
(22) Date of filing: 26.05.2014
(51) Int. Cl.: G01N 1/10, G01N 1/40, G01N 30/00

(54) **Portable system for automated preparation of liquid and/or solid samples**
Tragbares System zur automatischen Vorbereitung flüssiger und/oder fester Proben
Système portable de préparation automatisée d'échantillons liquides et/ou solides

(43) Date of publication of application: 02.12.2015
(73) Proprietor: CSEM Centre Suisse d'Electronique et de Microtechnique SA - Recherche et Développement, 2002 Neuchâtel (CH)
(72) Inventor: Heub, Sarah, ch-1018 Lausanne (CH)
(74) Representative: Gevers SA

(56) References cited:
- US-A- 4 942 135
- US-A1- 2005 019 951
- US-B1- 6 306 350
- Samantha Byrnes ET AL: "Supplemental Information for: A Portable, Pressure Driven, Room Temperature Nucleic Acid Extraction and Storage System for Point of Care Molecular Diagnostics", Analytical Methods, 13 May 2013 (2013-05-13), pages 1-7, XP055147898, Retrieved from the Internet: URL:http://www.rsc.org/suppdata/ay/c3/c3ay 40162f/c3ay40162f.pdf [retrieved on 2014-10-21]

## Description

### Technical Field

The present invention relates to the field of preparation of liquid and/or solid samples. In particular, it relates to a fluidic device capable of automated preparation of liquid and/or solid samples for detection of particular substances, such as small molecules, biomolecules, or even small organisms.

### State of the art

Among the various methods which are used for preparation of small molecules, techniques based on solid phase extraction are often the most efficient in terms of separation and enrichment. They are generally used prior to detection with chromatography or/and mass spectrometry related techniques.

The standard sample treatment for analytical procedures usually comprises collecting the sample and bringing it to the lab for further treatment. After filtration to remove small particles and small organisms, the sample is injected to a column made of silica or polymeric particles coated with an appropriate sorbent depending on the type of process (e.g. octadecyl, octyl, for reverse phase, aminopropyl for normal phase, sulfonic acid, carboxylic acid for ionic exchange). After elution and several liquid-liquid extraction, evaporation and dilution steps, the enriched sample is transferred to the system used for analysis. This procedure is significantly time and solvent consuming, especially when performed manually.

Some companies have developed partly or fully automated systems for the solid phase extraction process. Examples are the Acquity systems for UPLC by Waters, and the AutoTrace 280 series by Thermo Scientific which can be connected in line with HPLC, GC, GC-MS and GC-MS/MS systems. However, the use of such instruments is limited to the laboratory and none of them is adapted to biosensing detection methods, i.e. analytical methods that involve biological compounds in association with physicochemical detection devices for the detection of another compound.

A few automated portable devices can be used for sample enrichment with solid phase micro-extraction, such as that disclosed in CN 201096675. This document applies a method which is based on equilibrium between a liquid sample and a needle used as a solid phase. Thus this method excludes collection of the sample, and instead uses direct contact. The release of adsorbed compounds is done directly in a chromatography apparatus (in the liquid or the gaseous phase). However the needle which is used for the extraction is fragile and very sensitive to its environment (pH, ionic strength, temperature, mechanical perturbations...) and requires a calibration prior to its use in media with unknown concentrations of target compounds. Desorption and analysis can be performed on-site by using portable detectors (ex. portable GC), but they are mainly done once back in a lab.

Efforts have been made in the field of DNA analysis, with lot of emphasis on micro-fluidic devices that combine liquid sample collection, dilution, change in pH and degasing, prior to detection with a biosensor: see for instance WO 2011/036292.

Other automated portable sample preparation devices are disclosed in US 2005/019951, US 4942135A, US 6306350 B1, as well as in Samantha Byrnes et al. "Supplemental information for: A Portable, Pressure driven, room temperature Nucleic Acid Extraction and Storage System for Point of Care Molecular Diagnostics", Analytical Methods, 13 May 2013 (2013-05-13), pages 1-7, XP055147898.

Other integrated systems for collection and enrichment with eventual degasing have been developed but rather for electrochemical sensors: see for instance CN 101067621 and CN 101690855.

An object of the present invention is thus to provide a portable and automated system capable of complete sample preparation for delivery of the sample in a form that is adapted to a (bio)sensor.

### Disclosure of the invention

The object of the invention is attained by a portable automated sample preparation device containing:
- a collecting chamber for receiving a sample;
- at least one extraction device comprising an input in operative connection with an output of said collecting chamber, and comprising an output for outputting a concentrated sample;
- at least one solvent reservoir adapted to contain solvent, which may be water, an aqueous solution, an organic solvent, or any other convenient solvent, said solvent reservoir being in operative connection with the input of said extraction device;
- a source of pressurised gas or a source of pressurized liquid in operative connection with the collecting chamber and with the solvent reservoir, and arranged to cause said sample and said solvent to pass through said extraction device; said sample preparation device being characterized in that the said collecting chamber, said at least one extraction device, said solvent reservoir and said source of pressurised gas or liquid are contained in a housing and further characterized in that the housing comprises a first valve in fluid communication with each of said collecting chamber and said extraction device, a second valve in fluid communication with each of said source of pressurised gas or liquid and said solvent reservoir and
- a controller adapted to control operation of the sample preparation device.

As a result, a portable, (semi-)automated sample preparation device is proposed, which concentrates a substance or substances of interest such that it can be detected by a sensor, either integrated in the device or separate therefrom.

The device may also comprise a third valve in fluid communication with each of said source of pressurised gas or liquid and said collecting chamber. The valves are adapted to be controlled by the controller. Simple operation of the device is thus assured.

Advantageously, the device further comprises a filter, which may form part of a filter stack, situated upstream of said collecting chamber and in fluid communication with said collecting chamber. This filter prevents particulates and small organisms from entering the extraction device.

Advantageously, the device further comprises a degassing device in fluid communication with an output of said collecting chamber and the input of said extraction device, so as to prevent air bubbles from entering into the extraction device.

Advantageously, the device further comprises a sample reservoir situated downstream of said collecting chamber and upstream of said degassing device.

Advantageously, the extraction device comprises at least one of uncoated particles, coated particles which may optionally be coated with a stimulus-sensitive polymer (such as a thermo-sensitive polymer), a stimulus-responsive hydrogel (such as a thermo-sensitive hydrogel), a simple hydrogel, a monolithic solid phase, or a membrane.

Advantageously, the device further comprises a sensor in operative connection with said extraction device. A self-contained, portable sensing system is thus proposed.

Advantageously, said at least one extraction device comprises a plurality of extraction devices each adapted to concentrate a particular substance of interest, or a particular class of substances of interest. As a result, multiple substances of interest or classes thereof can be concentrated and detected simultaneously.

Advantageously, the portable sample preparation device further comprises an incubation chamber situated downstream of the extraction device and in fluid connection with at least one of a buffer reservoir and a reactant reservoir. A reaction can thus be carried out on the concentrated sample before sensing.

The aim of the invention is also attained by a method of preparing a sample by means of the portable sample preparation device as defined above, the method comprising the steps of:
receiving a sample in the collecting chamber;
applying pressure by means of said pressurised gas or liquid to said collecting chamber so as to cause said sample to pass into the extraction device, through a first valve in fluid communication with each of said collecting chamber and said extraction device;
concentrating said sample in the extraction device;
applying pressure by means of said pressurised gas or liquid to said solvent reservoir so as to expel said sample from the extraction device in concentrated form, through a second valve in fluid communication with each of said source of pressurised gas or liquid and said solvent reservoir;
wherein said steps are controlled by means of the controller (19).

Advantageously, the controller selectively controls opening and closing of a first valve, and a second valve. Furthermore, a third valve may also be present. Simple control of the apparatus is thus achieved.

Advantageously, the method further comprises a step of filtering said sample before it is received in the collecting chamber. Thus, small particles and/or small organisms are prevented from entering the extraction system.

Advantageously, the method further comprises a step of removing bubbles from the sample before and/or after it is introduced into the extraction device. Thus, bubbles are prevented from entering the extraction device

Advantageously, the sample is concentrated in the extraction device by means of solid phase extraction or molecularly imprinted polymers or by means of a stimulus-sensitive hydrogel, such as a thermo-sensitive hydrogel, or by means of a stimulus-sensitive polymer coating, such as a thermo-sensitive polymer coating, on micro-particles, or a monolithic solid phase, or a simple hydrogel, or a membrane.

### Brief description of the drawings

Further details of the invention will become more clearly apparent in reference to the following description and to the appended figures, which show:
- Figure 1: a schematic diagram of a simple form of the invention; and
- Figure 2: a schematic diagram showing a particular embodiment of the invention for simultaneous in-situ detection of estrogenic compounds and polyaromatic hydrocarbons;
- Figure 3: a schematic diagram of an alternative extraction device; and
- Figure 4: a schematic diagram showing a further particular embodiment of the invention.

### Embodiment of the invention

In the foregoing, the terms "upstream" and "downstream" are used with respect to the usual direction of flow of fluid during operation, as indicated with arrows on the figures, the arrows indicating the fluid connexions between components. These terms, when applied to parts of the device, imply that the parts in question are operatively connected, i.e. are in (selective) fluid connection with each other. It should further be noted that like parts are referred to with like reference signs.

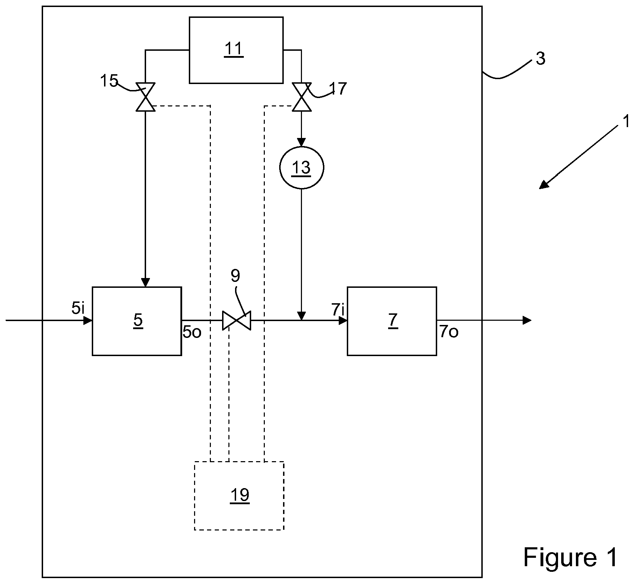

Fig. 1 illustrates schematically a portable sample preparation device 1 according to the invention, in a simple form. The portable sample preparation device 1 comprises a housing 3, of any convenient configuration, which serves to contain the portable sample preparation device 1.

Inside the housing 3 is situated a collecting chamber 5, into which a sample may be introduced via input 5i. The sample may be injected, pumped, suctioned, or introduced into collecting chamber 5 in any convenient manner, and a valve may be provided upstream of input 5i if required. Collecting chamber 5 comprises an output 5o, which is in operative connection with an input 7i of extraction device 7 via controllable first valve 9. In other words, output 5o is in selective fluid communication with input 7i.

It should be noted that many types of samples may be considered, whether solid (dissolved in an appropriate solvent), or liquid, or even solutions of gases in a liquid solute. Nonlimiting examples of such samples are water (sea water, river water, lake water, drinking water, waste water, swimming pool water), body samples (e.g. bodily fluids such as blood, urine, saliva, and tissues such as skin), or food products (e.g. fruit juice, milk cereals, meat, fruits, beer wort, beer, wine must, wine, spirits and so on).

Extraction device 7 furthermore comprises an output 7o, for outputting a prepared sample, for instance to a sensor (which may be internal or external to the device 1), or to a collection vessel for later analysis.

Furthermore, contained within housing 3 is a source of pressurised gas or liquid 11, such as an air pump, a gas canister, an input line from an external gas canister or from an external gas pump, or similar in the case of pressurised gas, or in the case of a pressurised liquid, this liquid should preferably be immiscible with the other liquids in the system with which they will come into contact, and can be pressurised e.g. by means of a pump. In the present and following examples, reference is made to pressurised gas, however the changes required to use pressurised liquid are clear. This source of pressurised gas or liquid 11 serves to propel liquids through the various components of the portable sample preparation device 1 by displacement, as will become clearer below. Alternatively or additionally, one or more pumps may be used to directly move the various liquids through the system.

Source of pressurised gas 11 is in operative connection with both a solvent reservoir 13 and the sample chamber 5, via respectively a second valve 17, and an optional third valve 15, so as to be able to force a sample out of the collecting chamber 5, and to force solvent into the input 7i of extraction device 7. Optional third valve 15 can be omitted, in which case the sample chamber 5 is in constant fluid communication with the source of pressurised gas 11.

Valves 9, 15 and 17 are controlled by controller 19 so as to create the correct flows of fluids and gases through the system, and it should be noted that dashed lines represent connections between controller 19 and other components.

Extraction device 7 may be of any convenient type, particularly one of the following types:
- a solid phase extraction system, comprising densely-packed particles forming the solid phase;
- a stimulus-sensitive hydrogel, such as a thermo-sensitive hydrogel, fabricated in situ or injected at an appropriate position;
- micro-particles comprising a thermo-sensitive polymer coating thereon;
- a membrane extractor;
- molecularly imprinted polymers;
- a monolithic solid phase.

In the case of particles, these particles may be magnetic such that they can be moved with an integrated and/or external magnetic field during the sample preparation process.

As is generally understood, an appropriate solvent, the choice of which will depend on the target molecules and the nature of the extraction medium, is provided in solvent reservoir 13, and if required a supply of a buffer liquid or solution, such as saline solution or (distilled or deionised) water, can be provided as appropriate.

All the above examples of solid phase extraction systems work on the same principle: compounds of interest are adsorbed onto a solid phase, and are desorbed by means of an appropriate eluent (organic and/or aqueous solution), or, in the case of thermo-sensitive media, are desorbed by heating or cooling the medium as appropriate. A particular example of thermo-sensitive media is a hydrogel which is hydrophobic at higher temperatures, and is hydrophilic at lower temperatures. At higher temperatures, the hydrophobic hydrogel will thus absorb apolar, non-ionic substances from a sample. Cooling the hydrogel below a particular transition temperature renders it hydrophilic, and flushing it with an aqueous substance causes it to release the apolar, non-ionic substances which had been adsorbed, thereby concentrating the compounds of interest. The same principle applies to surfaces, e.g. of particles, coated with a thermo-sensitive polymer.

Upon leaving the extraction device 7, the concentrated sample can either be passed directly to a sensor, or can be stored in an appropriate format, such as concentrated in a buffer, in Eppendorf-format tubes, or similar. If stored in this way the concentrated sample can then be analysed in a laboratory.

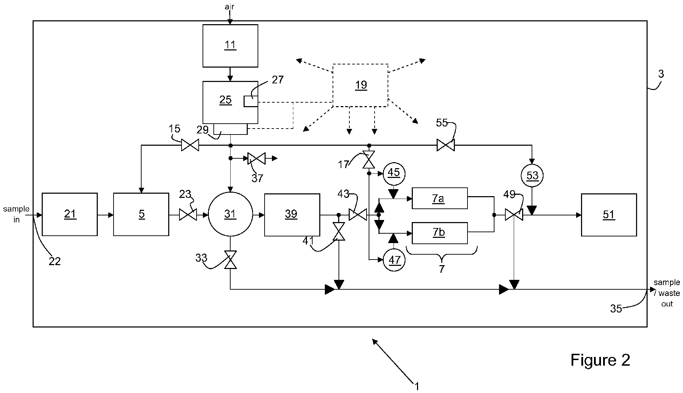

Figure 2 illustrates a particular embodiment of a portable sample preparation device 1 according to the invention, adapted for in-situ detection of both estrogenic compounds and poly-aromatic hydrocarbons.

In the embodiment of figure 2, the portable sample preparation device 1 comprises a housing 3, which contains, as before, a collecting chamber 5, a source of pressurised gas 11, an extraction device 7, and a controller 19. So as not to overcharge the figure, the connections between the controller 19, pressure controller 29, and the various valves 15, 17, 23, 33, 41, 43, 49, 55 have not been shown.

In the present embodiment, source of pressurised gas 11 is a pump, which compresses ambient air in a pressure chamber 25, which is provided with a pressure sensor 27 operatively connected with the controller 19. Pressure chamber 25 outputs through pressure controller 29, which is likewise operatively connected with the controller 19.

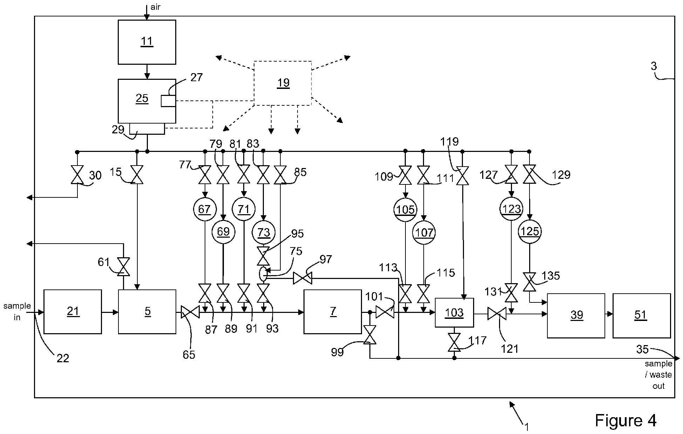

Upstream of collecting chamber 5 is a macrofilter 21 through which the sample passes after having been introduced through sample inlet 22, so as to avoid undesirable particles entering the system, such as small particles and/or small organisms with an average diameter above 0.1µm. If the sample is solid and is required to be in liquid form, it may have been dissolved in a solvent such as water prior to passing through macrofilter 21. Collecting chamber 5 outputs via valve 23 (fulfilling a similar function to first valve 9 of figure 1) to a collected sample reservoir 31, under pressure from pressure chamber 25. Sample reservoir 31 is furthermore in operative connection with pressure chamber 25, so as to be able to displace a collected sample from the sample reservoir 31. It should be noted that collecting chamber 5 and collected sample reservoir 31 do not need to be separate chambers, and can be replaced by a single chamber. The other adjustments to the system to achieve this configuration do not need to be elaborated upon here. An example of this type of configuration is given in the embodiment of figure 4 (see below).

For maintenance, the collected sample reservoir 31 can be drained through valve 33, from where it exits the housing at sample / waste outlet 35. It should also be noted that valve 37 permits venting the line between the pressure chamber 25 and the sample reservoir 31 to atmosphere.

Downstream of collected sample reservoir 31 is a degassing device 39, arranged so as to remove any bubbles which may be present in the collected sample. If not required, degassing device 39 can be omitted. Alternatively, one or more degassing devices 39 can be placed at one or more different positions in the system, as required. Similarly to valve 33, valve 41 permits to drain the downstream side of degassing device 39.

After having passed through degassing device 39, the collected sample passes through valve 43 to extraction device 7. Valve 43 also performs a similar function to first valve 9 of figure 1, alone or in combination with valve 23. In the present example, extraction device 7 comprises a first solid phase extraction column 7a for polyaromatic hydrocarbons, for which is provided a first reservoir 45 containing an appropriate solvent, together with a second solid phase extraction column 7b for estrogenic compounds, likewise together with a second reservoir 47 likewise containing an appropriate solvent. In the present, nonlimiting example, both columns 7a, 7b are filled with octadecyl-coated silica particles.

First and second reservoirs 45, 47 are both operatively connected with the source of pressurised gas 11 via valve 17, as in the example of figure 1, so as to, when required, displace solvent from the reservoirs 45, 47 and force it through the respective columns 7a, 7b.

Downstream of the extraction columns 7a, 7b is provided a three-way valve 49, arranged so as to selectively connect the outputs of the extraction columns 7a, 7b to the sensor 51, or to the sample / waste outlet 35. In such a fashion, the concentrated portion of the sample can be passed to the sensor, and the diluted portion can be simply output.

Finally, a saline solution reservoir 53 is provided upstream of sensor 51, so as to provide a buffer solution and to flush the sensor and the line leading from the three-way valve 49 to the sample / waste outlet 35. To this end, saline solution reservoir 53 is selectively in operative connection with the source of pressurised gas 11 via valve 55 so as to permit this.

It should further be noted that check valves (illustrated as large black arrows pointing in the direction of flow) can be arranged as appropriate to prevent backflow of liquids and gases. Naturally, further check valves may be added, and any which are not strictly necessary can be omitted or replaced by normal valves.

After introduction of a sample at sample input 22, the controller opens and closes the various valves at the appropriate moments and for the appropriate lengths of time so as to move the sample through the portable sample preparation device 1, to concentrate the species of interest in the extraction device 7, and to pass the concentrated sample to the sensor while outputting the remainder of the sample and the accompanying solvents at the sample / waste output 35.

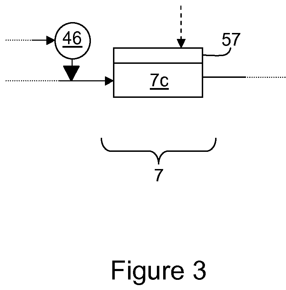

Figure 3 illustrates schematically a variant of extraction device 7. In this case, extraction device 7 comprises a microfluidic chip 7c containing a thermo-sensitive hydrogel, as discussed above. Other elements of the portable sample preparation device have been omitted, and it should be understood that extraction device 7 of figure 3 may simply replace that of figure 2 in the portable sample preparation device 1 of that figure. Furthermore, a heating and/or cooling device 57 is provided so as to heat and/or cool microfluidic chip 7c in response to signals from the controller 19 (the connection to which is represented by the dashed arrow in this figure). Solvent reservoir 46 is identical to solvent reservoir 45 in figure 2, yet contains water, which allows organic-solvent-free preparation of an aqueous sample. Hence, a desired organic compound can be extracted by the gel at a temperature above its critical solution temperature (LCST), and be released into water at a temperature below this LCST.

Figure 4 illustrates a further embodiment of a portable automated sample preparation device 1 according to the invention.

In the embodiment of figure 3, as in figure 2, the portable sample preparation device 1 comprises a housing 3, which contains, as before, a collecting chamber 5, a source of pressurised gas 11, an extraction device 7, which may be any of the above-mentioned types, and a controller 19. So as not to overcharge the figure, the connections between the controller 19, pressure controller 29, and all the various valves 30, 61, 15, 77, 79, 81, 83, 85, 87, 89, 91, 93, 95, 97, 99, 101, 109, 111, 113, 115, 117, 119, 121, 127, 129, 131, 135 (see below) have not been shown.

In the present embodiment, source of pressurised gas 11 is a pump, which compresses ambient air in a pressure chamber 25, which is provided with a pressure sensor 27 operatively connected with the controller 19. Pressure chamber 25 outputs through pressure controller 29, which is likewise operatively connected with the controller 19, and can be vented to the outside of the housing 3 via valve 30.

As in the embodiment of figure 2, upstream of collecting chamber 5 is a macrofilter 21 through which the sample passes after having been introduced through sample inlet 22, so as to avoid large undesirable particles entering the system, such as small particles and/or small organisms with an average diameter above 0.1µm. If the sample is solid and is required to be in liquid form, it may have been dissolved in a solvent such as water prior to passing through macrofilter 21. Collecting chamber 5 can be vented to the exterior of the housing 3 via valve so as to be purged.

Similarly to the embodiment of figure 1, collecting chamber 5 is in operative connection with pressure chamber 25 via a valve 15 (corresponding to valve 15 of figure 1), so as to be able to displace fluid from collecting chamber 5 by gas pressure. Note that there is no equivalent to sample reservoir 31 of figure 2, however such an equivalent could be added if required.

Collecting chamber 5 is in operative connection with extraction device 7 via valve 65 (corresponding to valve 9 of figure 1), and downstream of valve 65 and upstream of extraction device 7 are provided a plurality of solvent reservoirs 67, 69, 71 and 73, which contain different solvents for operating the extraction device 7. For example, reservoir 67 may contain a conditioning solvent (such as dilute acetic acid), reservoir 69 may contain a washing solvent (such as methanol diluted in water), reservoir 71 may contain a regeneration solvent (such as methanol, preferably substantially 100% methanol), and reservoir 73 may contain an elution solvent (such as methanol). Each reservoir 67, 69, 71, 73 is provided with a corresponding upstream valve 77, 79, 81, 83 respectively, and downstream valve 87, 89, 91, 93 respectively.

So as to provide an accurately-measured quantity of elution solvent to the extraction device 7, an intermediate reservoir 75 is provided upstream of valve 93 and downstream of reservoir 73, with a further valve 95 being situated between intermediate reservoir 75 and reservoir 73. This intermediate reservoir 75 can be fully charged with a predetermined quantity of eluent solvent from reservoir 73, corresponding to the volume of intermediate reservoir 75, which can then be discharged through the separation device 7 via valve 93 by means of gas pressure from the pressure chamber 25, supplied via valve 85. To refill intermediate reservoir 75, a yet further valve 97 is provided, which permits the gas within the intermediate reservoir 75 to escape to sample / waste outlet 35, and be replaced with eluent.

Downstream of separation device 7, valve 99 leads to sample / waste outlet 35, so as to permit draining or purging the separation device 7. Also downstream of separation device 7 is a further valve 101 connecting the separation device 7 with an incubation chamber 103. Incubation chamber 103 is used to carry out a chemical reaction on the concentrated sample leaving the separation device 7, by means of a buffer solution contained within buffer reservoir 105 and a reactant contained within reactant reservoir 107. Each of these reservoirs is connected upstream to the pressure chamber 25 via valves 109 and 111 respectively, and downstream to the incubation chamber 103 via valves 113 and 115 respectively. Incubation chamber 103 itself is also connected upstream to the pressure chamber 25 via valve 119, and downstream to the sample / waste outlet 35 via valve 117. Valves 93, 101, 109, 113, 111, 115 and 117 are opened so as to flow the sample out of the separator device 7 into the incubation chamber 103. Once the incubation chamber 103 is full, valve 117 is closed, the reaction takes place for a predetermined length of time, and subsequently the reacted sample leaves downstream via valve 121, which leads to optional degassing device 39 which is in fluid communication with the sensor 51. Note that, if no reaction needs take place, incubation chamber 103 and the associated reservoirs and valves can be omitted, or the sample can be simply passed through the incubation chamber 103 without application of buffer solution or reactant.

Downstream of valve 121 and upstream of the degassing device 29 are situated two further reservoirs, namely regeneration reservoir 123, containing a regeneration liquid for flushing and regenerating the sensor 51, and a further buffer reservoir 125. Each of these reservoirs 123, 125 is connected upstream to the pressure chamber 25 via valves 127, 129 respectively, and downstream to the gas bubble trap 39 via valves 131 and 135 respectively.

By means of controller 19, a sample introduced into the system at sample inlet 22 can be made to move through the system, have the one or more species of interest concentrated by the extraction device 7, be reacted if required in the incubation chamber 103, and sensed by the sensor 51. This is carried out by the controller 19 opening and closing all the various valves 30, 61, 15, 77, 79, 81, 83, 85, 87, 89, 91, 93, 95, 97, 99, 101, 109, 111, 113, 115, 117, 119, 121, 127, 129, 131, 135 in an appropriate sequence and at appropriate times.

In general, in respect of all embodiments it should be noted that:
- the sensor (51) may be of any convenient type, e.g. electrochemical sensor, biosensor;
- the various reservoirs may be accessible from outside the system so as to allow them to be replenished with solvents;
- the extraction device (7), and/or any convenient parts of the various conduits, and/or any convenient number of the various valves may be constructed as a microfluidic chip.

Particular, non-limiting examples of applications of the system and method according to the invention are as follows:
- detection of phenols in water;
- detection of chloroanilines in waste water;
- detection of polyaromatic hydrocarbons in oil;
- detection of drugs or infectious agents in blood or urine; and
- detection of proteins or drugs in milk.

These substances can be either detected immediately in a sensor provided in the sample preparation device (1), or the samples can be simply concentrated and prepared e.g. in a sample tube for later detection in the lab or by a sensor situated in a different system.

Although the present invention has been described in terms of specific embodiments, these are not to be construed as limiting the scope of the invention as defined by the appended claims.

## Claims

1. Portable automated sample preparation device (1) containing:
- a collecting chamber (5) for receiving a sample;
- at least one extraction device (7; 7a, 7b) comprising an input (7i) in operative connection with an output (5o) of said collecting chamber, and comprising an output (7o) for outputting a concentrated sample;
- a solvent reservoir (13; 45, 47; 67, 69, 71, 73) adapted to contain solvent, said solvent reservoir (13; 45, 47; 67, 69, 71, 73) being in operative connection with the input (7i) of said extraction device;
- a source of pressurised gas or liquid (11) in operative connection with the collecting chamber (5) and with the solvent reservoir (13; 45, 47; 67, 69, 71, 73), and arranged to cause said sample and said solvent to pass through said extraction device (7; 7a, 7b);
said sample preparation device (1) being **characterized in that** the said collecting chamber (5), said at least one extraction device (7; 7a, 7b), said solvent reservoir (13; 45, 47; 67, 69, 71, 73) and said source of pressurised gas or liquid (11) are contained in a housing (3) and further **characterized in that** the housing (3) comprises -a first valve (9; 23; 43; 65) in fluid communication with each of said collecting chamber (5) and said extraction device (7);
- a second valve (17; 77, 79, 81, 83) in fluid communication with each of said source (11) of pressurised gas or liquid and said solvent reservoir (13);
- a controller (19) adapted to control operation of the sample preparation device (1).

2. Portable automated sample preparation device (1) according to the preceding claim, further comprising a third valve (15) in fluid communication with each of said source of pressurised gas or liquid (11) and said collecting chamber, said valve (15) being adapted to be controlled by said controller (19).

3. Portable automated sample preparation device (1) according to any preceding claim, further comprising a filter (21) situated upstream of said collecting chamber (5) and in fluid communication with said collecting chamber (5).

4. Portable automated sample preparation device (1) according to any preceding claim, further comprising a degassing device (39) in fluid communication with an output of said collecting chamber (5) and the input of said extraction device (7; 7a, 7b).

5. Portable automated sample preparation device (1) according to the preceding claim, further comprising a sample reservoir (31) situated downstream of said collecting chamber (5) and upstream of said degassing device (39).

6. Portable automated sample preparation device (1) according to any preceding claim, wherein said extraction device (7; 7a, 7b) comprises at least one of:
- uncoated particles;
- coated particles;
- micro-particles comprising a thermo-sensitive polymer coating thereon;
- a stimulus-responsive hydrogel such as a thermo-responsive hydrogel;
- a hydrogel;
- a monolithic solid phase;
- a membrane.

7. Portable automated sample preparation device (1) according to any preceding claim, further comprising a sensor (51) in operative connection with said extraction device (7; 7a, 7b).

8. Portable automated sample preparation device (1) according to the preceding claim, wherein said at least one extraction device (7; 7a, 7b) comprises a plurality of extraction devices (7a; 7b) each adapted to concentrate a particular substance of interest or a particular class of substances of interest.

9. Portable automated sample preparation device (1) according to any preceding claim, further comprising an incubation chamber (103) situated downstream of the extraction device (7) and in fluid connection with at least one of a buffer reservoir (105) and a reactant reservoir (107).

10. Method of preparing a sample by means of the portable automated sample preparation device (1) according to any preceding claim, comprising the steps of:
- receiving a sample in the collecting chamber (5);
- applying pressure by means of said pressurised gas or liquid to said collecting chamber (5) so as to cause said sample to pass into the extraction device (7; 7a, 7b), through a first valve (9; 23; 43; 65) in fluid communication with each of said collecting chamber (5) and said extraction device (7);
- concentrating said sample in the extraction device (7; 7a, 7b);
- applying pressure by means of said pressurised gas or liquid to said solvent reservoir (13; 45, 47) so as to expel said sample from the extraction device (7; 7a, 7b) in concentrated form, through a second valve (17; 77, 79, 81, 83) in fluid communication with each of said source (11) of pressurised gas or liquid and said solvent reservoir (13);
wherein said steps are controlled by means of the controller (19).

11. Method according to claim 10, wherein said controller (19) selectively controls opening and closing of the first valve (9; 23, 43; 65), the second valve (17; 77, 79, 81, 83), and the optional third valve (15) if present.

12. Method according to one of claims 10 and 11, further comprising a step of filtering said sample before it is received in the collecting chamber (5).

13. Method according to one of claims 10-12, further comprising a step of removing gas from the sample before it is introduced into the extraction device (7; 7a, 7b).

14. Method according to one of claims 10-13, wherein said sample is concentrated in the extraction device (7; 7a, 7b) by means of solid phase extraction or molecularly imprinted polymers or a stimulus-sensitive hydrogel, such as a thermo-sensitive hydrogel, or a stimulus-sensitive polymer coating, such as a thermo-sensitive polymer coating, on micro-particles, or a monolithic solid phase, or a simple hydrogel, or a membrane.

15. Method according to one of claims 10-14, further comprising a step of detection of a substance of interest by means of a sensor (51).

## Patentansprüche

1. Tragbare automatisierte Probenherstellungsvorrichtung (1), enthaltend:
- eine Sammelkammer (5) zur Aufnahme einer Probe;
- mindestens eine Extraktionsvorrichtung (7; 7a, 7b), umfassend eine Eingabe (7i) in operativer Verbindung mit einer Ausgabe (5o) der Sammelkammer und umfassend eine Ausgabe (7o) zum Ausgeben einer konzentrierten Probe;
- einen Lösemittelbehälter (13; 45, 47; 67, 69, 71, 73), der ausgelegt ist, um Lösemittel zu enthalten, wobei der Lösemittelbehälter (13; 45, 47; 67, 69, 71, 73) in operativer Verbindung mit der Eingabe (7i) der Extraktionsvorrichtung steht,
- eine Quelle von unter Druck stehendem Gas oder unter Druck stehender Flüssigkeit (11) in operativer Verbindung mit der Sammelkammer (5) und mit dem Lösemittelbehälter (13; 45, 47; 67, 69, 71, 73) und angeordnet, um zu verursachen, dass die Probe und das Lösemittel durch die Extraktionsvorrichtung (7; 7a, 7b) passieren;
wobei die Probenherstellungsvorrichtung (1) **dadurch gekennzeichnet ist, dass** die Sammelkammer (5), die mindestens eine Extraktionsvorrichtung (7; 7a, 7b), der Lösemittelbehälter (13; 45, 47; 67, 69, 71, 73) und die Quelle von unter Druck stehendem Gas oder unter Druck stehender Flüssigkeit (11) in einem Gehäuse (3) enthalten sind, und weiter **dadurch gekennzeichnet, dass** das Gehäuse (3) ein erstes Ventil (9; 23; 43; 65) in fluidischer Kommunikation mit jedem der Sammelkammer (5) und der Extraktionsvorrichtung (7) umfasst;
- ein zweites Ventil (17; 77, 79, 81, 83) in fluidischer Kommunikation mit jedem der Quelle (11) von unter Druck stehendem Gas oder unter Druck stehender Flüssigkeit und dem Lösemittelbehälter (13);
- eine Steuerung (19), die ausgelegt ist, um den Betrieb der Probenherstellungsvorrichtung (1) zu steuern.

2. Tragbare automatisierte Probenherstellungsvorrichtung (1) nach dem vorhergehenden Anspruch, weiter umfassen dein drittes Ventil (15) in fluidischer Kommunikation mit jedem der Quelle von unter Druck stehendem Gas oder unter Druck stehender Flüssigkeit (11) und der Sammelkammer, wobei das Ventil (15) dazu ausgelegt ist, von der Steuerung (19) gesteuert zu werden.

3. Tragbare automatisierte Probenherstellungsvorrichtung (1) nach einem der vorhergehenden Ansprüche, weiter umfassend einen Filter (21), der vorgelagert von der Sammelkammer (5) und in fluidischer Kommunikation mit der Sammelkammer (5) angeordnet ist.

4. Tragbare automatisierte Probenherstellungsvorrichtung (1) nach einem der vorhergehenden Ansprüche, weiter umfassend eine Entgasungsvorrichtung (39) in fluidischer Kommunikation mit einer Ausgabe der Sammelkammer (5) und der Eingabe der Extraktionsvorrichtung (7; 7a, 7b).

5. Tragbare automatisierte Probenherstellungsvorrichtung (1) nach dem vorhergehenden Anspruch, weiter umfassen deinen Probebehälter (31), der nachgelagert von der Sammelkammer (5) und vorgelagert von der Entgasungsvorrichtung (39) angeordnet ist.

6. Tragbare automatisierte Probenherstellungsvorrichtung (1) nach einem der vorhergehenden Ansprüche, wobei die Extraktionsvorrichtung (7; 7a, 7b) mindestens eines der Folgenden umfasst:
- unbeschichtete Partikel;
- beschichtete Partikel;
- Mikropartikel, umfassend eine wämeempfindliche Polymerbeschichtung darauf;
- ein Stimulus-empfindliche Hydrogel wie z. B. ein wärmeempfindliches Hydrogel;
- ein Hydrogel;
- eine monolithische feste Phase;
- eine Membran.

7. Tragbare automatisierte Probenherstellungsvorrichtung (1) nach einem der vorhergehenden Ansprüche, weiter umfassend einen Sensor (51) in operativer Verbindung mit der Extraktionsvorrichtung (7; 7a, 7b).

8. Tragbare automatisierte Probenherstellungsvorrichtung (1) nach dem vorhergehenden Anspruch, wobei die mindestens eine Extraktionsvorrichtung (7; 7a, 7b) eine Vielzahl von Extraktionsvorrichtungen (7a; 7b) umfasst, von denen jede ausgelegt ist, um eine bestimmte Substanz oder eine bestimmte Klasse von Substanzen zu konzentrieren.

9. Tragbare automatisierte Probenherstellungsvorrichtung (1) nach einem der vorhergehenden Ansprüche, weiter umfassen deine Inkubationskammer (103), die nachgelagert von der Extraktionsvorrichtung (7) und in fluidischer Kommunikation mit mindestens einem eines Pufferbehälters (105) und eines Reaktantbehälters (107) steht.

10. Verfahren zur Herstellung einer Probe mit Hilfe einer tragbaren automatisierten Probenherstellungsvorrichtung (1) nach einem der vorhergehenden Ansprüche, umfassend die folgenden Schritte:
- Aufnehmen einer Probe in einer Sammelkammer (5);
- Anwenden eines Drucks mit Hilfe des unter Druck stehenden Gases oder der unter Druck stehenden Flüssigkeit auf die Sammelkammer (5), um zu verursachen, dass die Probe in die Extraktionsvorrichtung (7; 7a, 7b) durch ein erstes Ventil (9; 23; 43; 65) passiert, das in fluidischer Kommunikation mit jedem der Sammelkammer (5) und der Extraktionsvorrichtung (7; 7a, 7b) steht;
- Konzentrieren der Probe in der Extraktionsvorrichtung (7; 7a, 7b);
- Anwenden eines Drucks mit Hilfe des unter Druck stehenden Gases oder der unter Druck stehenden Flüssigkeit auf die Sammelkammer (13; 45, 47), um die Probe aus der Extraktionsvorrichtung (7; 7a, 7b) in konzentrierter Form durch ein zweites Ventil (17; 77, 79, 81, 83) in fluidischer Kommunikation mit jedem der Quelle (11) von unter Druck stehendem Gas oder unter Druck stehender Flüssigkeit und dem Lösemittelbehälter (13) auszustoßen;
wobei die Schritte mit Hilfe einer Steuerung (19) gesteuert werden.

11. Verfahren nach Anspruch 10, wobei die Steuerung (19) selektiv die Öffnung und den Verschluss des ersten Ventils (9; 23, 43; 65), des zweiten Ventils (17; 77, 79, 81, 83) und des optionalen dritten Ventils (15), falls vorhanden, steuert.

12. Verfahren nach einem der Ansprüche 10 und 11, weiter umfassend einen Schritt des Filterns der Probe, bevor sie in der Sammelkammer (5) aufgenommen wird.

13. Verfahren nach einem der Ansprüche 10 - 12, weiter umfassend einen Schritt des Entfernens von Gas von der Probe, bevor sie in die Extraktionsvorrichtung (7; 7a, 7b) eingeführt wird.

14. Verfahren nach einem der Ansprüche 10 - 13, wobei die Probe in der Extraktionsvorrichtung (7; 7a, 7b) mit Hilfe einer Festphasenextraktion oder molekular geprägter Polymere oder eines Stimulus-empfindlichen Hydrogels wie z. B. eines wärmeempfindlichen Hydrogels oder einer Stimulus-empfindlichen Polymerbeschichtung wie z. B. einer wärmeempfindlichen Polymerbeschichtung auf Mikropartikeln oder einer monolithischen Phase oder eines einfachen Hydrogels oder einer Membran konzentriert wird.

15. Verfahren nach einem der Ansprüche 10 - 14, weiter umfassend einen Schritt des Nachweisens einer bestimmten Substanz mit Hilfe eines Sensors (51).

## Revendications

1. Dispositif de préparation d'échantillon automatisé portatif (1) contenant :
- une chambre de collecte (5) destinée à recevoir un échantillon ;
- au moins un dispositif d'extraction (7 ; 7a, 7b) comprenant une entrée (7i) en liaison avec une sortie (5o) de ladite chambre de collecte, et comprenant une sortie (70) destinée à fournir un échantillon concentré ;
- un réservoir à solvant (13 ; 45, 47 ; 67, 69, 71, 73) adapté pour contenir un solvant, ledit réservoir à solvant (13 ; 45, 47 ; 67, 69, 71, 73) étant en liaison avec l'entrée (7i) dudit dispositif d'extraction ;
- une source de gaz ou de liquide pressurisé (11) en liaison avec la chambre de collecte (5) et avec le réservoir à solvant (13 ; 45, 47 ; 67, 69, 71, 73), et prévue pour permettre audit échantillon et audit solvant de passer par ledit dispositif d'extraction (7 ; 7a, 7b) ;
ledit dispositif de préparation d'échantillon (1) étant **caractérisé en ce que** ladite chambre de collecte (5), ledit au moins un dispositif d'extraction (7 ; 7a, 7b), ledit réservoir à solvant (13 ; 45, 47 ; 67, 69, 71, 73) et ladite source de gaz ou de liquide pressurisé (11) sont contenus dans une enceinte (3), et étant en outre **caractérisé en ce que** l'enceinte (3) comprend
- une première valve (9 ; 23 ; 43 ; 65) en communication fluidique avec chacun de ladite chambre de collecte (5) et dudit dispositif d'extraction (7) ;
- une seconde valve (17 ; 77, 79, 81, 83) en communication fluidique avec chacun de ladite source (11) de gaz ou de liquide pressurisé et dudit réservoir à solvant (13) ;
- un contrôleur (19) adapté pour contrôler le fonctionnement du dispositif de préparation d'échantillon (1).

2. Dispositif de préparation d'échantillon automatisé portatif (1) selon la revendication précédente, comprenant en outre une troisième valve (15) en communication fluidique avec chacune de ladite source de gaz ou de liquide pressurisé (11) et de ladite chambre de collecte, ladite valve (15) étant adaptée pour être contrôlée par ledit contrôleur (19).

3. Dispositif de préparation d'échantillon automatisé portatif (1) selon l'une quelconque des revendications précédentes, comprenant en outre un filtre (21) situé en amont de ladite chambre de collecte (5) et en communication de fluide avec ladite chambre de collecte (5).

4. Dispositif de préparation d'échantillon automatisé portatif (1) selon l'une quelconque des revendications précédentes, comprenant en outre un dispositif de dégazage (39) en communication fluidique avec une sortie de ladite chambre de collecte (5) et l'entrée dudit dispositif d'extraction (7 ; 7a, 7b).

5. Dispositif de préparation d'échantillon automatisé portatif (1) selon la revendication précédente, comprenant en outre un réservoir à échantillon (31) situé en aval de ladite chambre de collecte (5) et en amont dudit dispositif de dégazage (39).

6. Dispositif de préparation d'échantillon automatisé portatif (1) selon l'une quelconque des revendications précédentes, dans lequel ledit dispositif d'extraction (7 ; 7a, 7b) comprend au moins l'un :
- de particules non-enduites ;
- de particules enduites ;
- de microparticules recouvertes d'un revêtement en polymère thermosensible ;
- d'un hydrogel réactif à un stimulus tel qu'un hydrogel thermo-réactif ;
- d'un hydrogel ;
- d'une phase solide monolithique ;
- d'une membrane.

7. Dispositif de préparation d'échantillon automatisé portatif (1) selon l'une quelconque des revendications précédentes, comprenant en outre un capteur (51) en liaison avec ledit dispositif d'extraction (7 ; 7a, 7b).

8. Dispositif de préparation d'échantillon automatisé portatif (1) selon la revendication précédente, dans lequel ledit au moins un dispositif d'extraction (7 ; 7a, 7b) comprend une pluralité de dispositifs d'extraction (7a ; 7b) chacun adaptés pour concentrer une substance particulière souhaitée ou une catégorie particulière de substances souhaitées.

9. Dispositif de préparation d'échantillon automatisé portatif (1) selon l'une quelconque des revendications précédentes, comprenant en outre une chambre d'incubation (103) située en aval du dispositif d'extraction (7) et en liaison fluidique avec au moins l'un d'un réservoir tampon (105) et d'un réservoir de réactif (107).

10. Procédé de préparation d'un échantillon à l'aide du dispositif de préparation d'échantillon automatisé portatif (1) selon l'une quelconque des revendications précédentes, comprenant les étapes qui consistent à :
- recevoir un échantillon dans la chambre de collecte (5) ;
- appliquer une pression à l'aide dudit gaz ou liquide pressurisé à ladite chambre de collecte (5) de façon à ce que ledit échantillon passe dans le dispositif d'extraction (7 ; 7a, 7b), par le biais d'une première valve (9 ; 23 ; 43 ; 65) en communication fluidique avec chacun de ladite chambre de collecte (5) et dudit dispositif d'extraction (7) ;
- concentrer ledit échantillon dans le dispositif d'extraction (7 ; 7a, 7b) ;
- appliquer une pression à l'aide dudit gaz ou liquide pressurisé audit réservoir à solvant (13 ; 45, 47) de façon à expulser ledit échantillon du dispositif d'extraction (7 ; 7a, 7b) sous forme concentrée, par le biais d'une seconde valve (17 ; 77, 79, 81, 83) en communication fluidique avec chacun de ladite source (11) de gaz ou de liquide pressurisé et dudit réservoir à solvant (13) ;
dans lequel lesdites étapes sont contrôlées à l'aide du contrôleur (19).

11. Procédé selon la revendication 10, dans lequel ledit contrôleur (19) contrôle sélectivement l'ouverture et la fermeture de la première valve (9 ; 23, 43 ; 65), de la seconde valve (17 ; 77, 79, 81, 83), et de la troisième valve optionnelle (15) le cas échéant.

12. Procédé selon l'une des revendications 10 et 11, comprenant en outre une étape de filtrage dudit échantillon avant qu'il soit reçu dans la chambre de collecte (5).

13. Procédé selon l'une des revendications 10 à 12, comprenant en outre une étape de retrait du gaz de l'échantillon avant qu'il soit introduit dans le dispositif d'extraction (7 ; 7a, 7b).

14. Procédé selon l'une des revendications 10 à 13, dans lequel ledit échantillon est concentré dans le dispositif d'extraction (7 ; 7a, 7b) à l'aide d'une extraction en phase solide ou de polymères moléculairement imprimés ou d'un hydrogel sensible à un stimulus, tel qu'un hydrogel thermosensible, ou d'un revêtement en polymère sensible à un stimulus, tel qu'un revêtement en polymère thermosensible, sur des microparticules, ou d'une phase solide monolithique, ou d'un hydrogel simple, ou d'une membrane.

15. Procédé selon l'une des revendications 10 à 14, comprenant en outre une étape de détection d'une substance souhaitée à l'aide d'un capteur (51).
